# EUROPEAN PATENT APPLICATION

(11) **EP 2 500 809 A2**
(43) Date of publication of application: **19.09.2012**
(21) Application number: 11176407.2
(22) Date of filing: 03.08.2011
(51) Int. Cl.: G06F 3/048

(54) **Handheld devices and related data transmission methods**

(30) Priority: 18.03.2011 US 454066 P; 21.04.2011 TW 100113857
(71) Applicant: Acer Incorporated, Taipei Hsien 221 (TW)
(72) Inventor: Sip, Kim Yeung, 221 Taipei Hsien (TW)
(74) Representative: Michalski Hüttermann & Partner

(57) **Abstract**

Data transmission methods for handheld devices at least including a touch-sensitive screen are provided. The data transmission method includes the steps of: detecting an edge movement touch which is generated by first detecting that an object has contacted a point which is inside of the touch-sensitive display unit and has been dragged to an edge of the touch-sensitive display unit; when detecting the edge movement touch, generating first information according to the edge movement touch; and determining whether to transmit a file according to a comparison result of the first information and second information generated on an electronic device that is located neighboring to the handheld device. The file is transmitted to the electronic device when the comparison result matches a predetermined condition.

## Description

### CROSS REFERENCE TO RELATED APPLICATIONS

This Application claims priority of U.S. Provisional Application No. 61/454,066, filed on March 18, 2011, and Taiwan Patent Application No. 100113857, filed on April 21, 2011, the entirety of which are incorporated by reference herein.

### BACKGROUND OF THE INVENTION

### Field of the Invention

The disclosure relates generally to handheld devices and related data transmission methods, and, more particularly to handheld devices and related data transmission methods capable of performing data sharing between two devices which are neighboring to each other.

### Description of the Related Art

Recently, handheld devices, such as mobile phones, smart phones or PDAs (Personal Digital Assistants), have become more and more technically advanced and multifunctional. Because of the conveniences of these devices, the devices have become necessities of life.

For some handheld devices, such as smart phones, PDAs, tablet PCs and so on, a touch screen which is directly touchable may be provided as a main input device for users to control functions thereof. Users of the handheld devices can slide their fingers to touch the items displayed by the touch screen to issue a command, and perform or control operations corresponding to the selected items. For example, users can click on a drawing button or icon displayed on the touch screen to activate a drawing function, or can click on a navigation button or icon displayed on the touch screen to activate a GPS navigation function.

As user requirements and behaviors change, data (e.g. multimedia files, messages or the like) sharing capability among different devices have become a required function of the handheld devices. Generally, when data is to be shared, users may perform a number of operations to start data transmission. For example, users may have to first select data to be shared/transmitted, and then select to transmit the data and then select to transmit the data to a user or device via a type of communication protocol, such as via the wireless network, via the Bluetooth or the infra-red communication protocol. After the communication protocol is determined, the determined communication protocol must be activated and the shared data can then be sent to the user to be shared via the activated communication protocol. Such a complex operation and data sharing method, however, may not meet user requirements any more. Therefore, it is desired to provide a more attractive data sharing and data transmission method for users.

### BRIEF SUMMARY OF THE INVENTION

Handheld devices and data transmission methods thereof are provided to provide data sharing between two neighboring devices.

In an embodiment of a data transmission method for use in a handheld device which at least comprises a touch-sensitive display unit, an edge movement touch is detected on the touch-sensitive display unit, wherein the edge movement touch is generated by first detecting that an object has contacted a point which is inside of the touch-sensitive display unit and has been dragged to an edge of the touch-sensitive display unit. When detecting the edge movement touch, first information is then generated according to the edge movement touch. It is determined whether to transmit a file according to a comparison result of the first information and second information generated on an electronic device that is located neighboring to the handheld device. The file is transmitted to the electronic device when the comparison result matches a predetermined condition.

An embodiment of a handheld device comprises a storage unit, a touch-sensitive display unit, and a processing unit. The storage unit comprises at least one file. The processing unit detects an edge movement touch on the touch-sensitive display unit, generates first information according to the edge movement touch when detecting the edge movement touch, and determines whether to transmit the file according to a comparison result of the first information and second information generated on an electronic device that is located neighboring to the handheld device, wherein the edge movement touch is generated by first detecting that an object has contacted a point which is inside of the touch-sensitive display unit and has been dragged to an edge of the touch-sensitive display unit and the file is transmitted to the electronic device when the comparison result matches a predetermined condition.

Data transmission methods may take the form of a program code embodied in a tangible media. When the program code is loaded into and executed by a machine, the machine becomes an apparatus for practicing the disclosed method.

### BRIEF DESCRIPTION OF THE DRAWINGS

The invention will become more fully understood by referring to the following detailed description with reference to the accompanying drawings, wherein:

Fig. 1 is a schematic diagram illustrating an embodiment of a data transmission system of the invention;

Fig. 2 is a flowchart of an embodiment of a data transmission method of the invention;

Fig. 3 is a schematic diagram illustrating an embodiment of a data format example of first information of the invention;

Fig. 4 is a schematic diagram illustrating an embodiment of a data format example of second information of the invention;

Figs. 5A to 5C are schematic diagrams illustrating an embodiment of operations of the data transmission method of the invention; and

Fig. 6 is a flowchart of another embodiment of a data transmission method of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

Embodiments of the invention provide data transmission methods and related handheld devices and data transmission systems to issue a file transmission command to transmit data to be shared (e.g. pictures, audio files and so on) to neighboring devices by intuitively using cross-device directional gestures, such that the shared data can be transmitted to specific devices according to feature data generated in different devices due to continuity of the cross-device directional gestures.

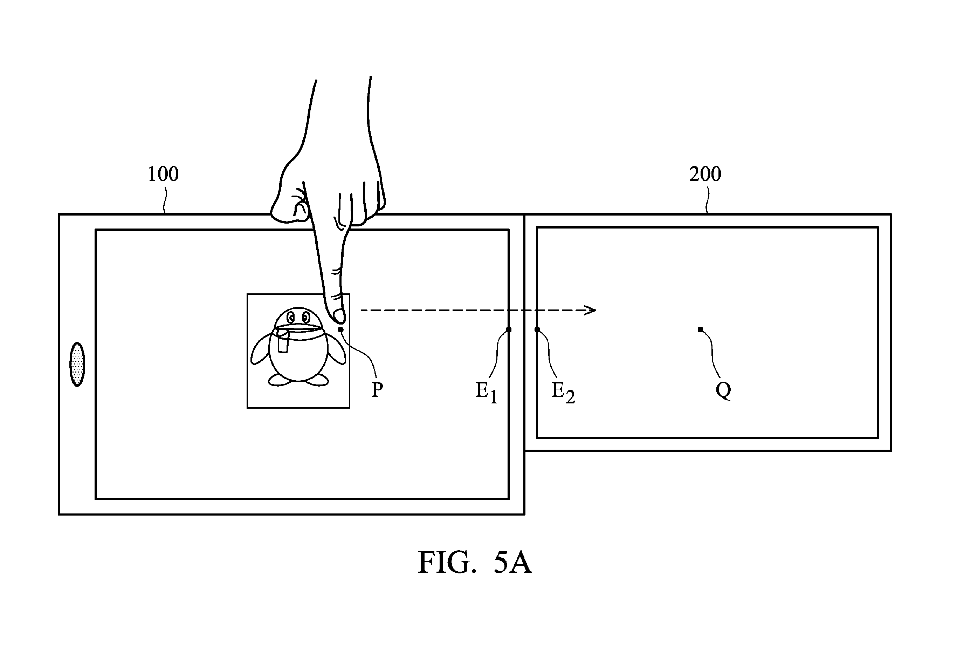

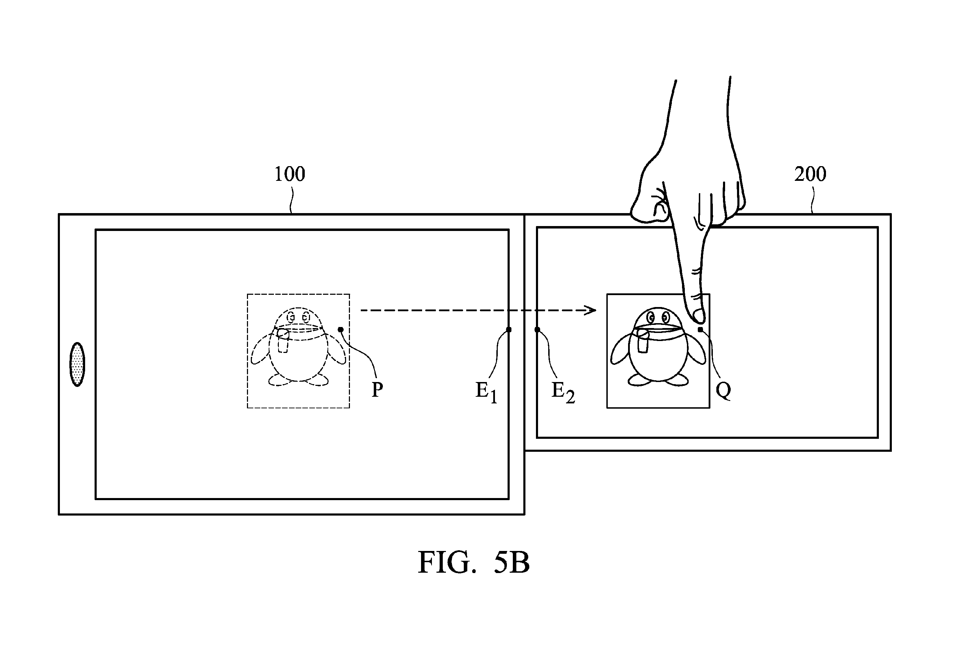

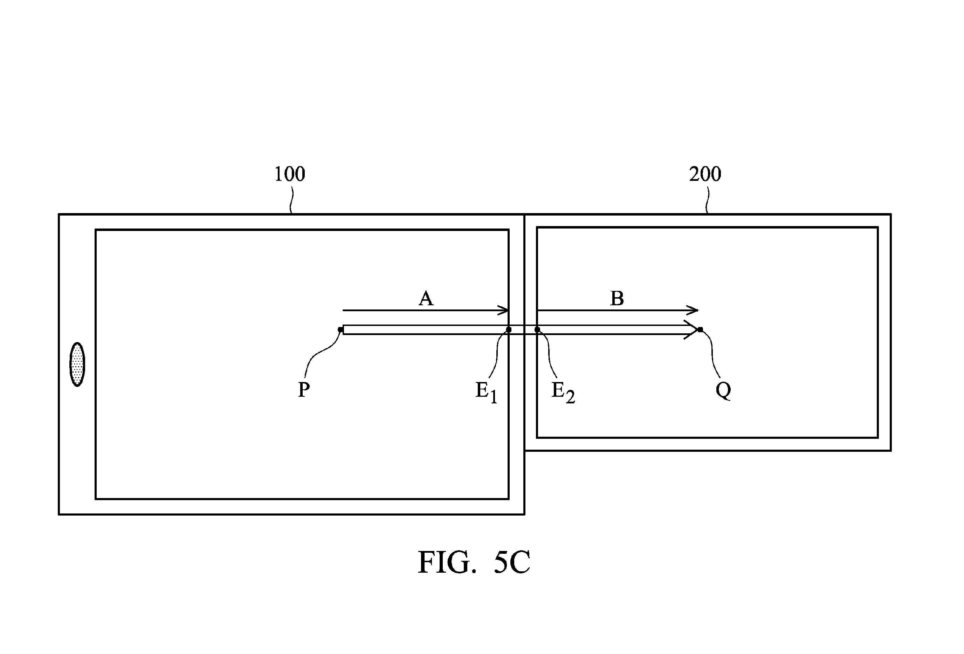

As the handheld device is neighboring to the electronic device, when the user performs a cross-device drag-and-drop operation via an object such as a pen/stylus or finger, vectors generated on the handheld device and the electronic device may have a number of parameters (e.g. a direction parameter, a speed parameter or other parameters) and the location parameters of two devices are also the same or similar if a continually gesture is utilized. The transmission device (e.g. the handheld device) may transmit first information which at least contains drag file information for the file to be transmitted and the parameters to a server, while the receiving device (e.g. the electronic device) may transmit second information which contains the parameters to the server. For example, referring to Figs. 5A to 5C, since the handheld device 100 is neighboring to the electronic device 200, when the user drags an icon of a file at a point P (as shown in Fig. 5A) on a touch-sensitive display unit of the handheld device 100 to another point Q (as shown in Fig. 5B) on a touch-sensitive display unit of the electronic device 200 via an object such as a pen/stylus or finger, an edge movement touch, which is generated by the object contacting a point which is inside of the touch-sensitive display unit and has been dragged to an edge E1 of the touch-sensitive display unit, is generated on the handheld device 100 and another edge movement touch, which is generated by the object contacting an edge E2 of a touch-sensitive display unit of the electronic device 200 and being dragged to a point which is inside of the touch-sensitive display unit of the electronic device 200, is also generated on the electronic device 200 (as shown in Fig. 5C) due to such cross-device dragging operation. The edge movement touch on the handheld device 100 may generate first information containing information regarding the file to be transmitted and a directional vector A while the another edge movement touch on the electronic device 200 may generate second information containing a directional vector B, as shown in Fig. 5C. Therefore, the first information and the second information include the parameters such that the server may receive a number of second information from different devices and compare received second information with the first information to find a match, in which the parameters of the matched second information match the parameters of the first information, to find out the target device that the handheld device is going to transmit the file to, so as to transmit the file to a correct electronic device.

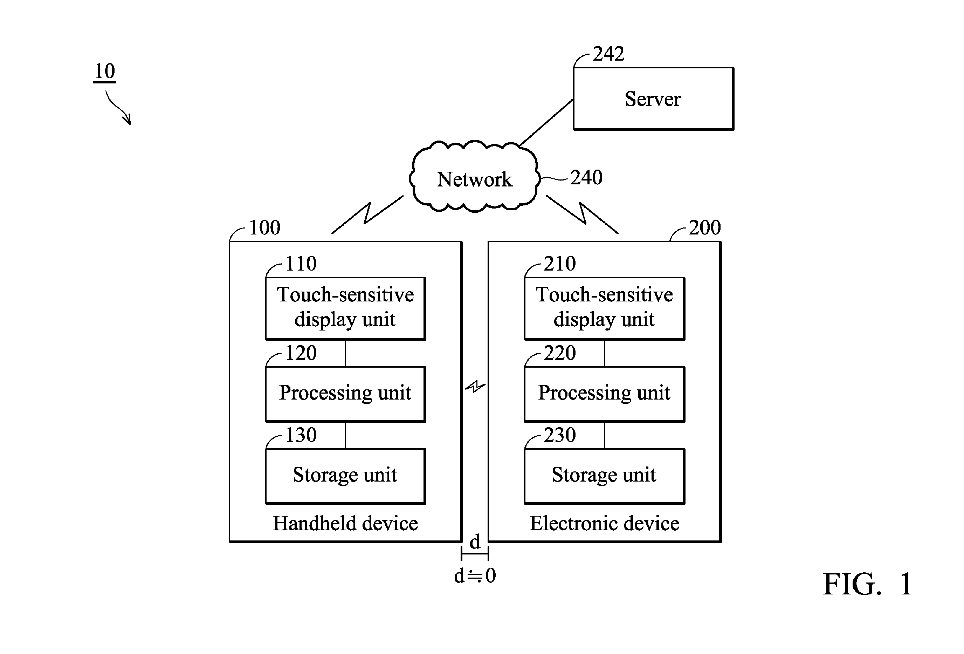

Fig. 1 is a schematic diagram illustrating an embodiment of a data transmission system of the invention. The data transmission system 10 of the invention at least comprises a handheld device 100 and an electronic device 200, wherein the handheld device 100 and the electronic device 200 are within a limited distance d, and are communicated with each other through a wireless communication protocol, such as an infra-red (IR), or Bluetooth protocol and so on. The electronic device 200 may be an electronic device which is the same as the handheld device 100 or another type of electronic device, such as a smart phone, a PDA (Personal Digital Assistant), a laptop computer or a tablet computer.

The handheld device 100 may at least comprise a touch-sensitive display unit 110, a processing unit 120 and a storage unit 130. It is understood that the touch-sensitive display unit 110 may be integrated with a touch-sensitive device (not shown). The touch-sensitive device has a touch-sensitive surface comprising sensors in at least one dimension to detect contact and movement of at least one object (control tool), such as a pen/stylus or finger near or on the touch-sensitive surface. The touch-sensitive display unit 110 can display related data, such as texts, figures, interfaces, and/or information.

The storage unit 130 stores at least one file and a number of gesture recognition data. The gesture recognition data within the storage unit 130 may further be provided to the processing unit 120 for subsequent determination of the type of inputted gesture. The processing unit 120 which is coupled to the touch-sensitive display unit 110 can perform the data transmission method of the present invention, which will be discussed further in the following paragraphs.

Similarly, the electronic device 200 may at least comprise a touch-sensitive display unit 210, a processing unit 220 and a storage unit 230. It is understood that the touch-sensitive display unit 210 may be integrated with a touch-sensitive device (not shown) and at least displays a user interface and related data and related icons data. Note that the touch-sensitive display unit 210 may have functions which are the same as those of the touch-sensitive display unit 110. The storage unit 230 stores any type of data. The processing unit 220 which is coupled to the touch-sensitive display unit 210 can perform the data transmission method of the present invention, which will be discussed further in the following paragraphs. In one embodiment, the handheld device 100 and the electronic device 200 may be devices with the same functions, such as both being smart phones.

In addition to using the wireless communication protocol, such as an infra-red (IR), or Bluetooth protocol and so on, the handheld device 100 and the electronic device 200 may also communicate with each other through a server 242 in a connection network 240 (e.g. wired/wireless networks). Both the handheld device 100 and the electronic device 200 are connected to the connection network 240 and may transmit data to or receive data from the network 240. The network 240 further includes a server 242, wherein the server 242 may contain device information (e.g. MAC/IMEI/IP information and so on) and authentication information of the handheld device 100 and the electronic device 200.

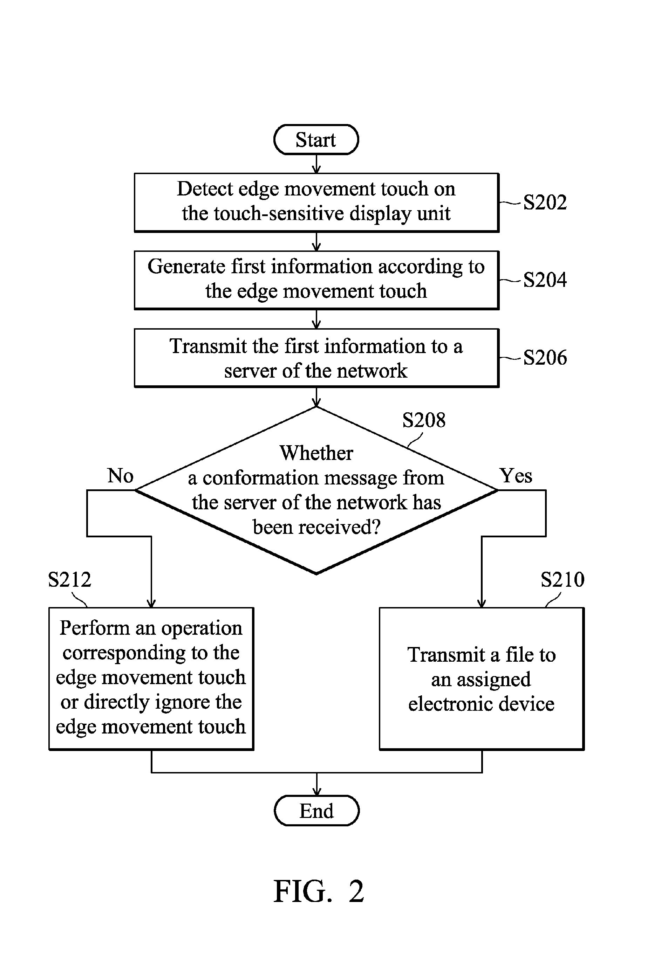

Fig. 2 is a flowchart of an embodiment of a data transmission method of the invention. Please refer to Figs. 1 and 2. The data transmission method can be used in an electronic device, such as a portable device, e.g. a PDA, a smart phone, a mobile phone, an MID, a laptop computer, a tablet computer, or any other type of handheld device. However, it is to be understood that the invention is not limited thereto. It is to be noted that, in this embodiment, the handheld device 100 comprises a touch-sensitive display unit 110 and the electronic device 200 comprises a touch-sensitive display unit 210. It is assumed that both the handheld device 100 and the electronic device 200 are connected to the network 240, so that the handheld device 100 and the electronic device 200 may transmit data to or receive data from the network 240. The network 240 further includes a server 242, wherein the server 242 may contain device information (e.g. MAC/IMEI/IP information and so on) and authentication information of the handheld device 100 and the electronic device 200.

First, in step S202, the processing unit 120 detects an edge movement touch on the touch-sensitive display unit 110, wherein the edge movement touch is generated by an object (e.g. a pen/stylus or finger) contacting a point which is inside of the touch-sensitive display unit 110 and being dragged to an edge of the touch-sensitive display unit 110. To be more specific, the processing unit 120 may detect a touch on the touch-sensitive display unit 110 and determine whether the touch is continually moving to the edge of the touch-sensitive display unit 110. When the touch is determined as continually moving to the edge of the touch-sensitive display unit 110, the processing unit 120 detects the edge movement touch. Note that users are able to generate the edge movement touch via a movement of at least one object (input tool), such as a pen/stylus or finger, by dragging a touched item to any edge of the touch-sensitive display unit 110.

After the edge movement touch on the touch-sensitive display unit 110 is detected, in step S204, the processing unit 120 generates first information according to the edge movement touch. For example, the first information may at least contain device related information for the handheld device 100 and information related to the edge movement touch, such as a first device parameter, first directional parameter, first speed parameter and so on, and it is not limited thereto. The device parameter may contain MAC address/IMEI/IP address of the device, and the directional parameter may contain information regarding a starting point and an ending point (e.g. one of the edges of the touch-sensitive display unit 110) for the finger movement to indicate a direction of the edge movement touch caused by the finger. The speed parameter is used for indicating the speed of the finger movement. Moreover, the first information may further contain drag file information for the file to be transmitted, such as a file name, a file format, a file size and so on.

After the file information has been generated, in step S206, the processing unit 120 then transmits the first information to the server 242 of the network 240. After the transmission of the first information is completed, the processing unit 120 will wait for a further instruction from the server 242 of the network 240. Thus, in step S208, the processing unit 120 further determines whether a conformation message from the server 242 of the network 240 has been received.

As previously stated, since the handheld device 100 is neighboring to the electronic device 200, when the user drags an icon of a file at a point P (as shown in Fig. 5A) on the touch-sensitive display unit 110 of the handheld device 100 to another point Q (as shown in Fig. 5B) on the touch-sensitive display unit 210 of the electronic device 200 via an object such as a finger, an edge movement touch, which is a movement touch from a point which is inside of the touch-sensitive display unit 110 to an edge E1 of the touch-sensitive display unit, can be generated on the handheld device 100 and another edge movement touch, which is a movement touch from an edge E2 of the touch-sensitive display unit 210 of the electronic device 200 to a point which is inside of the touch-sensitive display unit 210 of the electronic device 200, can also be generated on the electronic device 200 (as shown in Fig. 5C) due to such cross-device dragging operation. A directional vector A may be generated based on the edge movement touch generated in the handheld device 100 and a directional vector B may be generated based on the another edge movement touch generated in the electronic device 200, as shown in Fig. 5C. When detecting that the another edge movement touch has been generated on the touch-sensitive display unit 210, the processing unit 220 may further generate second information according to the another edge movement touch. Therefore, after the server 242 receives the first information from the handheld device 100, it will further wait for at least one second information 400 from other electronic devices 200 in the network 240. Similarly, the second information 400 may at least contain device related information for the electronic device 200 and information related to the another edge movement touch, such as a second device parameter, second directional parameter, second speed parameter and so on, and it is not limited thereto.

It is to be understood that, the server 242 may receive various first information and second information from different devices 200 at the same time and has to match each of the first information with the second information to find a matching pair of the first information and responsive second information. Thus, after the first information has been received, the server 242 may find out one second information which is substantially received at the same time as the first information, wherein the parameter thereof are the same as or similar to the parameters of the first information. Following, the server 242 may then recognize the target electronic device that the file is to be transmitted to based on the device related information within the second information so as to complete the file transmission. As the first information transmitted by the handheld device 100 at the transmission end contains file information corresponding to the file to be transmitted and the second information transmitted by the electronic device 200 at the receiving end does not contain that file information, the server 242 may further distinguish between the first information and the second information according to a determination of whether the file information corresponding to the file to be transmitted is included in the received information when it receive various first information and second information from different devices 200 at the same time and has to match each of the first information with the second information to find a matching pair of the first information and a responsive second information.

After the second information has been received, the server 242 may further compare the first information 300 with the second information 400 and then determine whether the first information and the second information matches a predetermined condition based on the comparison result. As previously stated, since the handheld device 100 is neighboring to the electronic device 200, when the user performs a cross-device dragging operation which is a continuous gesture between the handheld device 100 and the electronic device 200 via an object such as a finger or stylus, the vector generated in the handheld device 100 and the vector generated in the electronic device 200 may have a lot of parameters (e.g. the directional, the speed and other parameters) which are the same as or similar to each other and the location parameter for the handheld device 100 may also be the same as or similar to that for the electronic device 200, due to such continuous gesture. Therefore, the determination of whether the first information and the second information matches a predetermined condition may at least comprise determining whether the first directional parameter indicates a direction which is essentially the same as that indicated by the second directional parameter, and it is determined that the predetermined condition is not matching when the comparison result indicates that the first directional parameter indicates a direction which is different from that indicated by the second directional parameter. Moreover, the determination of whether the first information and the second information match the predetermined condition may at least comprise determining whether a difference between the first speed parameter and the second speed parameter has not exceeded a predetermined tolerance range and it is determined that the predetermined condition is not matching when the comparison result indicates that the condition that the difference between the first speed parameter and the second speed parameter has not exceeded the predetermined tolerance range is not matched.

When the comparison result of the first information 300 and the second information 400 matches the predetermined condition, the server 242 determines that the electronic device 200 that is transmitting the second information 400 is the receiving end for receiving the file and thus transmits a confirmation message to the handheld device 100 via the network 240. When the handheld device 100 receives the confirmation message transmitted by the server 242, which means that the server 242 has granted the transmission request and knows which electronic device 200 is to be the receiving end (e.g. by the device parameter within the second information), thus, in step S210, the processing unit 120 transmits a file to the electronic device 200. The file may comprise multimedia files, such as audio, video, picture files and other type of files which can be transmitted and shared to each other. Because the first information contains file related information, the file to be transmitted can be directly transmitted to the target electronic device 200 through the server 242 in the network 240 after the first information is successfully matched to the second information. Therefore, the user may transmit the file from the handheld device 100 to an assigned neighboring electronic device 200 through the aforementioned cross-device dragging operation. Preferably, the electronic device 200 is closely connected to the handheld device 100.

When the handheld device 100 does not receive the confirmation message transmitted by the server 242 (No in step S208), which means that the user has not made a request for transmission, in step S212, it performs an operation corresponding to the edge movement touch, e.g. switching to a next page, on the touch-sensitive display unit 110 or directly ignores the edge movement touch when there is no operation corresponding to the edge movement touch since it may be an unintentional touch made by the user.

Thus, with the data transmission method of the invention, the user can directly issue a cross-device file transmission request by pressing, by the finger, the file to be transmitted and dragging the pressed file to another neighboring device, increasing convenience and fun of the data transmission operation for the user.

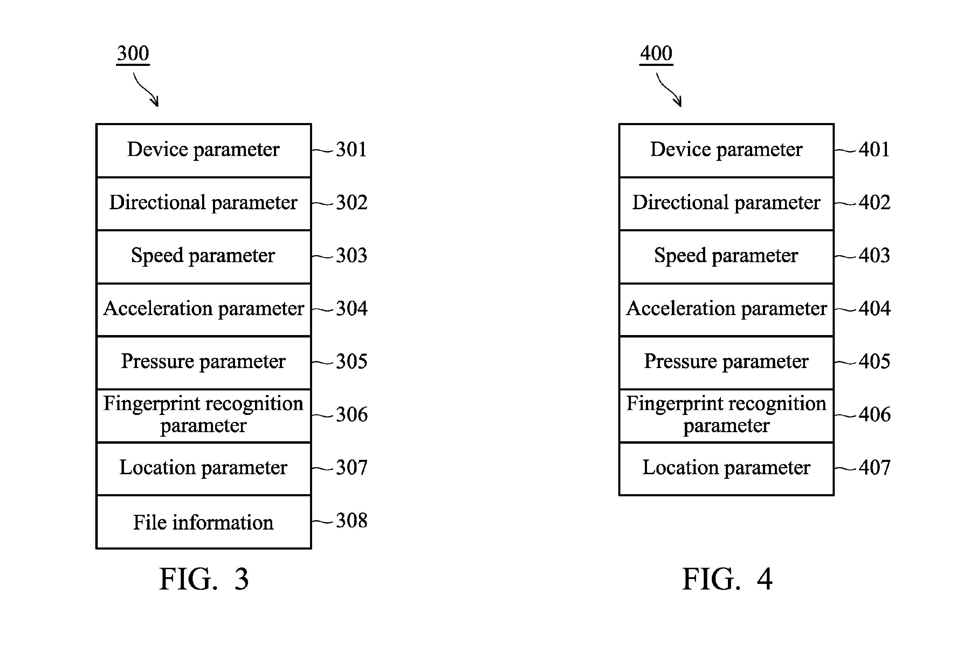

In some embodiments, the first information and the second information may further contain other parameters to improve the accuracy of the determination step. Please refer to Figs. 3 and 4. Fig. 3 is a schematic diagram illustrating an embodiment of a data format example of the first information of the invention and Fig. 4 is a schematic diagram illustrating an embodiment of a data format example of the second information of the invention. As shown in Fig. 3, the first information 300 includes a number of fields 301-307, wherein field 301 indicates the device parameter (e.g. the MAC address/IMEI/IP address and so on) for the handheld device 100, and field 302 indicates a directional parameter corresponding to the detected edge movement touch, which also indicates a moving direction of the edge movement touch. Note that the directional parameter is represented by an absolute directional vector A. Field 303 indicates a speed parameter, which is represented by the speed at the start point and the speed at the ending point of the vector A. Field 304 indicates an acceleration parameter, which is represented by the acceleration at the start point and the acceleration at the ending point of the vector A. Field 305 indicates a pressure parameter, which is represented by the pressure detection value detected at the start point and the pressure detection value detected at the ending point of the vector A. For example, if an item is pressed by the same object (e.g. the same finger), the greater the pressed force is, the greater the touched area generated on the touch-sensitive display unit 110 is. Thus, the pressure detection value may be represented by the size of the touched area generated. Field 306 indicates a fingerprint recognition parameter for assisting in determining the user identity of the user to provide security verification. Field 307 indicates a location parameter for the vector A, which may be obtained by the position information collected by the positioning device such as a GPS, Skyhook and other positioning devices. The location parameter for the vector A indicated by the field 307 can be used in determining whether the user of the handheld device 100 is a specific area.

Similarly, as shown in Fig. 4, the second information 400 includes a number of fields 401-407, wherein field 401 indicates the device parameter (e.g. the MAC address/IMEI/IP address and so on) for the electronic device 200, and field 402 indicates a directional parameter corresponding to the another edge movement touch detected on the electronic device 200, which also indicates a direction that the another edge movement touch is moved toward to. Note that the directional parameter is represented by an absolute directional vector B. Field 403 indicates a speed parameter, which is represented by the speed at the start point and the speed at the ending point of the vector B. Field 404 indicates an acceleration parameter, which is represented by the acceleration at the start point and the acceleration at the ending point of the vector B. Field 405 indicates a pressure parameter, which is represented by the pressure detection value detected at the start point and the pressure detection value detected at the ending point of the vector A. Field 406 indicates a fingerprint recognition parameter, and field 307 indicates a location parameter for the vector B, which may be obtained by the position information collected by the positioning device such as a GPS, Skyhook and other positioning devices. Note that the second directional parameter, the second speed parameter, the second acceleration parameter, the second pressure parameter and the second location parameter within the second information correspond to the first directional parameter, the first speed parameter, the first acceleration parameter, the first pressure parameter and the first location parameter within the first information respectively. It is to be understood that the second information 400 may be generated by the processing unit 220 of the electronic device 200 in response to detection of the another edge movement touch on the touch-sensitive display unit 210.

It is to be noted that, as shown in Fig. 3, the first information 300 further includes an additional field 308 for indicating file information for the file to be transmitted when the second information 400 does not contain the file information.

In addition, the predetermined condition may at least comprise that the first location parameter indicates an area which is essentially the same as that indicated by the second location parameter, e.g. in the same room or area, for further determining whether the first information and the second information correspond to the same user.

In some embodiments, the determination of whether the first information and the second information match the predetermined condition comprises determining whether all of the parameters within the first information correspond to all responsive parameters within the second information, and the predetermined condition is determined as matching when all of the parameters within the first information correspond to all responsive parameters within the second information. For example, the server 242 may sequentially determine whether the first directional parameter indicates a direction which is essentially the same as that indicated by the second directional parameter, whether a difference between the first speed parameter and the second speed parameter has not exceeded a predetermined tolerance range, whether a difference between the first acceleration parameter and the second acceleration parameter is less than a predetermined tolerance range and whether a difference between the first pressure parameter and the second pressure parameter is less than a predetermined tolerance range, and the predetermined condition is determined as matching only when all of the previously stated conditions have been satisfied. That is, the first directional parameter indicates a direction which is essentially the same as that indicated by the second directional parameter, the difference between the first speed parameter and the second speed parameter has not exceeded a predetermined tolerance range, the difference between the first acceleration parameter and the second acceleration parameter is less than a predetermined tolerance range and the difference between the first pressure parameter and the second pressure parameter is less than a predetermined tolerance range. For example, the server 242 may determine whether the predetermined condition is matching by simultaneously determining whether a difference between the absolute directional vector A and the absolute directional vector B is less than 5%, whether the speed at the ending point of the vector A equals to 1.2 times the speed at the start point of the vector B, whether the acceleration at the ending point of the vector A equals to 1.2 times the acceleration at the start point of the vector B an so on.

Furthermore, in some embodiments, the server 242 may further determine whether the first information and the second information match the predetermined condition by determining whether the first fingerprint recognition parameter is the same as the second fingerprint recognition parameter, and the predetermined condition is determined as being matched only when the first fingerprint recognition parameter is the same as the second fingerprint recognition parameter.

In another embodiment, a data transmission method that is capable of transmitting data between devices without using a network is provided for use in two neighboring devices which are capable of performing short range communications and data transmissions with each other through a wireless communication protocol, such as an infra-red (IR), or Bluetooth protocol and so on. Assume that the handheld device 100 and the electronic device 200 are communicated with each other through a wireless communication protocol, such as an infra-red (IR), or Bluetooth protocol and so on. The handheld device 100 and the electronic device 200 will first be matched to each other. Master-slave architecture is then utilized, wherein the device at the transmission end is set to be a master device and the device at the receiving end is set to be a slave device.

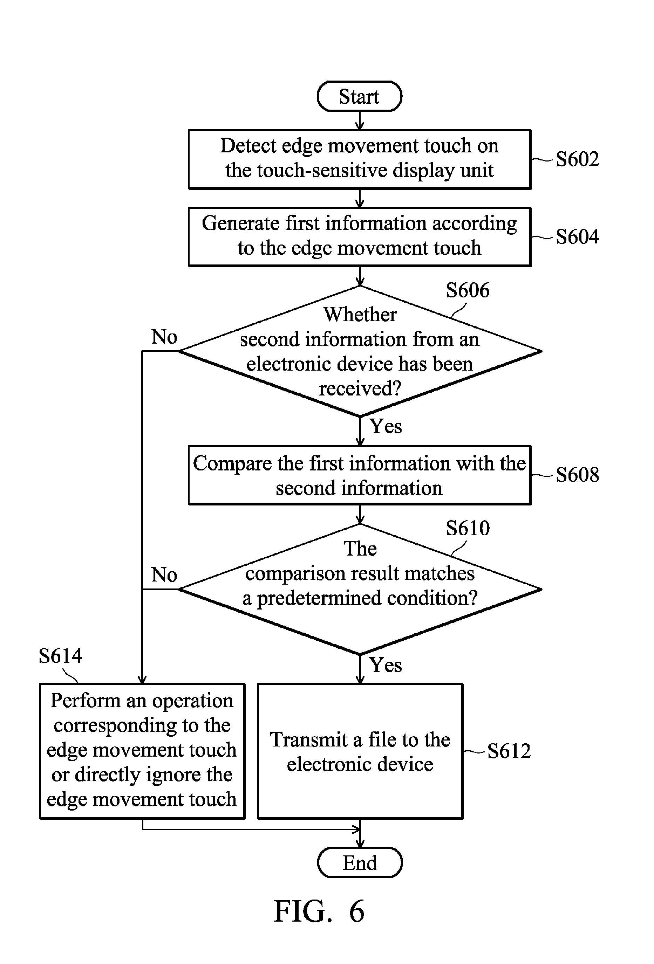

Fig. 6 is a flowchart of another embodiment of a data transmission method of the invention. Please refer to Figs. 1 and 6. The data transmission method can be used in an electronic device, such as the handheld device 100, e.g. a PDA, a smart phone, a mobile phone, an MID, a laptop computer, a tablet computer, or any other type of handheld device. However, it is to be understood that the invention is not limited thereto. It is to be noted that, in this embodiment, the handheld device 100 comprises a touch-sensitive display unit 110 and the electronic device 200 comprises a touch-sensitive display unit 210. In this embodiment, for illustration purposes, it is assumed that both the handheld device 100 and the electronic device 200 match with each other or may detect that they are neighboring to each other through a proximity sensor (not shown) and automatically matched with each other. Thus, the handheld device 100 and the electronic device 200 may transmit data therebetween through the wireless communication protocol, wherein the handheld device 100 at the transmission end is set to be a master device and the electronic device 200 at the receiving end is set to be a slave device.

First, in step S602, the processing unit 120 detects an edge movement touch on the touch-sensitive display unit 110, wherein the edge movement touch is generated by an object (e.g. a pen/stylus or finger) contacting a point which is inside of the touch-sensitive display unit 110 and being dragged to an edge of the touch-sensitive display unit 110.

After the edge movement touch on the touch-sensitive display unit 110 is detected, in step S604, the processing unit 120 generates first information 300 according to the edge movement touch. For example, the first information 300 may at least contain drag file information for the file to be transmitted, and first directional parameter, first speed parameter, first acceleration parameter, first pressure parameter and first location parameter, wherein the data format of the first information 300 is the same as the data format shown in Fig.3. The directional parameter may be determined according to a set of gesture information that is related to the edge movement touch. Similarly, as aforementioned, the directional parameter may contain information indicating the direction that the gesture is moved.

After the file information has been generated, the processing unit 120 will wait for a response from the electronic device 200.

In step S606, the processing unit 120 further determines whether second information from an electronic device 200 has been received, wherein the electronic device 200 is neighboring to the handheld device 100. For example, the processing unit 120 may determine whether second information from the electronic device 200 has been received, wherein the second information 400 may at least contain a second directional parameter, second speed parameter, second acceleration parameter, second pressure parameter and second location parameter, wherein the data format of the second information 400 is similar to the data format shown in Fig. 4, and the second directional parameter, the second speed parameter, the second acceleration parameter, the second pressure parameter and the second location parameter within the second information correspond to the first directional parameter, the first speed parameter, the first acceleration parameter, the first pressure parameter and the first location parameter within the first information respectively. It is to be understood that the second information 400 may be generated by the processing unit 220 of the electronic device 200 in response to detection of the another edge movement touch on the touch-sensitive display unit 210.

After the second information 400 from the electronic device 200 has been received, in step S608, the processing unit 120 further compares the first information 300 with the second information 400 and then, in step S610, determines whether the first information and the second information matches a predetermined condition based on the comparison result. To be more specific, the processing unit 120 may compare the first information 300 with the second information 400 and determine that the electronic device 200 which transmits the second information 400 is the receiving end if the comparisons result of the first information and the second information matches a predetermined condition. The processing unit 120 may determine whether the first information and the second information matches a predetermined condition in the same way as the previously stated embodiments, such as the determination may at least comprise determining whether a portion of or all of the conditions selected from the following conditions have been satisfied: the first directional parameter indicates a direction which is essentially the same as that indicated by the second directional parameter, or determining whether a difference between the first speed parameter and the second speed parameter has not exceeded a predetermined tolerance range, whether a difference between the first acceleration parameter and the second acceleration parameter is less than a predetermined tolerance range and other conditions. The predetermined condition is determined as not being matched when the comparison result indicates that the first directional parameter indicates a direction which is different from that indicated by the second directional parameter or any of the aforementioned conditions have not been matched.

When the predetermined condition is determined as being matched, the processing unit 120 confirms that a transmission request is issued and determines that the neighboring electronic device 200 that is transmitting the second information 400 is the receiving end for receiving the file. Thus, in step S612, the processing unit 120 transmits a file (e.g. an object at the start point of the touch) to the electronic device 200 through a wireless communication protocol. Thereafter, the processing unit 220 of the electronic device 200 may then receive the file and perform further processing for the file, such as storing the file into the storage unit 230 or displaying the content of the file on the screen of the touch-sensitive display unit 210. Contrarily, if the processing unit 120 does not receive the second information transmitted by the electronic device for comparison (No in step S606) or the comparison result indicates that the predetermined condition is not matching (No in step S610), in step S614, which means that the user has not made a request for transmission, the the processing unit 120 performs an operation corresponding to the edge movement touch or directly ignores the edge movement touch. In addition, the predetermined condition may at least comprise that the first location parameter indicates an area which is essentially the same as that indicated by the second location parameter, e.g. in the same room or area, for further determining whether the first information and the second information correspond to the same user. In some embodiments, the determination of whether the first information and the second information match the predetermined condition comprises determining whether all of the parameters within the first information correspond to all responsive parameters within the second information, and the predetermined condition is determined as being matched only when all of the parameters within the first information correspond to all responsive parameters within the second information. Furthermore, in some embodiments, the processing unit 120 may further determine whether the first information and the second information match the predetermined condition by determining whether the first fingerprint recognition parameter is the same as the second fingerprint recognition parameter, and the predetermined condition is determined as being matched only when the first fingerprint recognition parameter is the same as the second fingerprint recognition parameter.

For explanation, data transmission methods for sharing a picture file between two devices which are closely connected to each other are illustrated as examples in this embodiment, and those skilled in the art will understand that the present invention is not limited thereto. When the file to be shared is a picture file, the content of the picture file can be directly displayed when it is received. Please refer to Figs. 5A-5C which together illustrates a cross-device and cross-boundary continuous gesture. When a user attempts to perform a data transmission/data sharing operation, the user presses a file to be shared at point P on the handheld device 100 (Fig. 5A) by their finger to select the file to be shared. Then, the user drags and drops the file from point P to point Q on the electronic device 200 by their finger and then stops pressing the file at point Q to represent that a file transmission operation is to be performed (Fig. 5B). This cross-device dragging operation will touch an edge E1 of the touch-sensitive display unit 110 and an edge E2 of the touch-sensitive display unit 210 (Fig. 5C). Thus, the processing unit 120 detects an edge movement touch on the touch-sensitive display unit 110 and generates the first information 300 with a format which is the same as that shown in Fig. 3 according to the edge movement touch, wherein the first information further contains drag file information regarding the file to be transmitted.

After the first information 300 has been generated, the processing unit 120 then transmits the first information 300 to the server 242 of the network 240 and waits for a further response from the server 242. Meanwhile, the processing unit 220 of the electronic devices 200 may detect another movement touch on the touch-sensitive display unit 210, generate the second information 400 with a format which is the same as that shown in Fig. 3 according to the another edge movement touch and transmit the second information 400 to the server 242 of the network 240. After the second information 400 has been received, the server 242 may further compare the first information 300 with the second information 400 and then determine whether the first information 300 and the second information 400 are matched according to the previously stated predetermined conditions. In this embodiment, the handheld device 100 attempts to transmit the file to the electronic device 200 so that the first information 300 and the second information 400 will match with the predetermined condition. Thus, the server 242 transmits a confirmation message to the handheld device 100 via the network 240, which means that the server 242 has granted the transmission request, such that the processing unit 120 may then transmit a file to the electronic device 200 through a wireless communication protocol or the network 240.

In a specific embodiment, the handheld device 100 (i.e. the transmission device) may separately neighboring to a number of the electronic devices 200. In this case, the user of the handheld device 100 may determine which electronic device 200 that a file is to be transmitted to, by using different responsive cross-device directional gesture, thus data sharing among multiple devices can be easily achieved.

Data transmission methods, or certain aspects or portions thereof, may take the form of a program code (i.e., executable instructions) embodied in tangible media, such as floppy diskettes, CD-ROMS, hard drives, or any other machine-readable storage medium, wherein, when the program code is loaded into and executed by a machine, such as a computer, the machine thereby becomes an apparatus for practicing the methods. The methods may also be embodied in the form of a program code transmitted over some transmission medium, such as electrical wiring or cabling, through fiber optics, or via any other form of transmission, wherein, when the program code is received and loaded into and executed by a machine, such as a computer, the machine becomes an apparatus for practicing the disclosed methods. When implemented on a general-purpose processor, the program code combines with the processor to provide a unique apparatus that operates analogously to application specific logic circuits.

While the invention has been described by way of example and in terms of preferred embodiment, it is to be understood that the invention is not limited thereto. Those who are skilled in this technology can still make various alterations and modifications without departing from the scope and spirit of this invention. Therefore, the scope of the present invention shall be defined and protected by the following claims and their equivalent.

## Claims

1. A data transmission method for use in a handheld device, wherein the handheld device at least comprises a touch-sensitive display unit, comprising:
detecting an edge movement touch on the touch-sensitive display unit,
wherein the edge movement touch is generated by first detecting that an object has contacted a point which is inside of the touch-sensitive display unit and has been dragged to an edge of the touch-sensitive display unit;
when detecting the edge movement touch, generating first information
according to the edge movement touch; and
determining whether to transmit a file according to a comparison result of the
first information and second information generated on an electronic device that is located neighboring to the handheld device;
wherein the file is transmitted to the electronic device when the comparison
result matches a predetermined condition.

2. The data transmission method of claim 1, wherein the step of determining whether to transmit the file according to the comparison result of the first information and the second information of the electronic device further comprises:
determining whether the second information has been received from the
electronic device; and
when receiving the second information from the electronic device, comparing
the first information with the second information to generate the comparison result.

3. The data transmission method of claim 1, wherein the handheld device is connected to a network, and the step of determining whether to transmit the file according to the comparison result of the first information and the second information of the electronic device further comprises:
transmitting the first information to a server in the network;
determining whether a confirmation message for indicating that the
comparison result matches the predetermined condition has been received from the server of the network; and
when receiving the confirmation message from the server of the network,
transmitting the file to the electronic device that is assigned by the server.

4. The data transmission method of any of claims 1 to 3, wherein the second information is generated by the electronic device in response to detection of another edge movement touch, wherein the another edge movement touch is generated by the object contacting an edge of a touch-sensitive display unit of the electronic device and being dragged to a point which is inside of the touch-sensitive display unit of the electronic device.

5. The data transmission method of any of claims 1 to 4, wherein the first information further contains file information corresponding to the file and the second information does not contain the file information.

6. The data transmission method of claim 5, wherein the first information contains at least one of a first directional parameter, first speed parameter, first acceleration parameter, first pressure parameter and first location parameter which correspond to the edge movement touch while the second information contains at least one of a second directional parameter, second speed parameter, second acceleration parameter, second pressure parameter and second location parameter which correspond to the another edge movement touch, wherein the parameters of the first information and the parameters of the second information are at least partially corresponding to each other.

7. The data transmission method of claim 6, wherein the predetermined condition includes a portion of or all of the conditions selected from the following conditions:
the first directional parameter indicates a direction which is essentially the
same as that indicated by the second directional parameter;
a difference between the first speed parameter and the second speed parameter
has not exceeded a predetermined tolerance range;
a difference between the first acceleration parameter and the second
acceleration parameter is less than a predetermined tolerance range;
a difference between the first pressure parameter and the second pressure
parameter is less than a predetermined tolerance range; and
the first location parameter indicates an area which is essentially the same as
that indicated by the second location parameter.

8. The data transmission method of claim 5, wherein the first information further contains a first fingerprint recognition parameter and the second information further contains a second fingerprint recognition parameter, and the step of determining whether the comparison result of the first information and the second information matches the predetermined condition further comprises determining whether the first fingerprint recognition parameter is the same as the second fingerprint recognition parameter.

9. The data transmission method of claim 4, wherein the edge movement touch generated on the touch-sensitive display unit of the device and the another edge movement touch generated on the touch-sensitive display unit of the second device are generated by a cross-device and cross-boundary continually edge gesture.

10. A handheld device, comprising:
a storage unit, comprising at least one file;
a touch-sensitive display unit; and
a processing unit, detecting an edge movement touch on the touch-sensitive
display unit, generating first information according to the edge movement touch when detecting the edge movement touch, and determining whether to transmit the file according to a comparison result of the first information and second information generated on an electronic device that is located neighboring to the handheld device,
wherein the edge movement touch is generated by first detecting that an object
has contacted a point which is inside of the touch-sensitive display unit and has been dragged to an edge of the touch-sensitive display unit and the file is transmitted to the electronic device when the comparison result matches a predetermined condition.

11. The handheld device of claim 10, wherein the processing unit further determines whether the second information has been received from the electronic device, and compares the first information with the second information to generate the comparison result when receiving the second information from the electronic device.

12. The handheld device of claim 10, wherein the handheld device is connected to a network, and the processing unit further transmits the first information to a server in the network, determines whether a confirmation message for indicating that the comparison result matches the predetermined condition has been received from the server of the network, and transmits the file to the electronic device that is assigned by the server when the confirmation message from the server of the network has been received.

13. The handheld device of any of claims 10 to 12, wherein the second information is generated by the electronic device in response to detection of another edge movement touch, wherein the another edge movement touch is generated by the object contacting an edge of a touch-sensitive display unit of the electronic device and being dragged to a point which is inside of the touch-sensitive display unit of the electronic device.

14. The handheld device of any of claims 10 to 13, wherein the first information further contains file information corresponding to the file and the second information does not contain the file information.

15. The handheld device of claim 14, wherein the first information contains at least one of a first directional parameter, first speed parameter, first acceleration parameter, first pressure parameter and first location parameter which correspond to the edge movement touch while the second information contains at least one of a second directional parameter, second speed parameter, second acceleration parameter, second pressure parameter and second location parameter which correspond to the another edge movement touch, wherein the parameters of the first information and the parameters of the second information are at least partially corresponding to each other.

16. The handheld device of claim 15, wherein the predetermined condition includes a portion of or all of the conditions selected from the following conditions:
the first directional parameter indicates a direction which is essentially the
same as that indicated by the second directional parameter;
a difference between the first speed parameter and the second speed parameter
has not exceeded a predetermined tolerance range;
a difference between the first acceleration parameter and the second
acceleration parameter is less than a predetermined tolerance range;
a difference between the first pressure parameter and the second pressure
parameter is less than a predetermined tolerance range; and
the first location parameter indicates an area which is essentially the same as
that indicated by the second location parameter.

17. The handheld device of claim 14, wherein the first information further contains a first fingerprint recognition parameter and the second information further contains a second fingerprint recognition parameter, and the step of determining whether the comparison result of the first information and the second information matches the predetermined condition further comprises determining whether the first fingerprint recognition parameter is the same as the second fingerprint recognition parameter.

18. The handheld device of claim 13, wherein the edge movement touch generated on the touch-sensitive display unit of the device and the another edge movement touch generated on the touch-sensitive display unit of the second device are generated by a cross-device and cross-boundary continually edge gesture.
